# EUROPÄISCHE PATENTSCHRIFT

(11) **EP 1 973 716 B1**
(45) Veröffentlichungstag und Bekanntmachung des Hinweises auf die Patenterteilung: **13.04.2016**
(21) Anmeldenummer: 07711132.6
(22) Anmeldetag: 12.01.2007
(51) Int. Cl.: B26D 5/08

(54) **VERFAHREN ZUR FRÄSBEARBEITUNG VON BAUTEILEN**
METHOD FOR THE MILLING MACHINING OF COMPONENTS
PROCÉDÉ D'USINAGE DE PIÈCES PAR FRAISAGE

(30) Priorität: 19.01.2006 DE 102006002617
(43) Veröffentlichungstag der Anmeldung: 01.10.2008
(73) Patentinhaber: MTU Aero Engines AG, 80995 München (DE)
(72) Erfinder: HEINRICH, Stefan, 82276 Adelshofen (DE); GLÄSSER, Arndt, 85221 Dachau (DE); LEBKÜCHNER, Götz, 82110 Germering (DE)
(86) Internationale Anmeldenummer: PCT/DE2007/000035
(87) Internationale Veröffentlichungsnummer: WO 2007/082504

(56) Entgegenhaltungen:
- EP-A1- 0 881 030
- DE-A1- 2 812 719
- DE-A1- 4 300 627
- DE-A1- 4 300 643
- GB-A- 2 181 374
- SU-A1- 619 321
- US-A- 4 498 987
- US-A- 5 079 821
- US-A- 5 867 885

## Beschreibung

Die Erfindung betrifft ein Verfahren zur Fräsbearbeitung von Bauteilen gemäß dem Oberbegriff des Anspruchs 1. Ein solches Verfahren ist beispielweise aus US 5 867 885 A bekannt.

Moderne Gasturbinen, insbesondere Flugtriebwerke, müssen höchsten Ansprüchen im Hinblick auf Zuverlässigkeit, Gewicht, Leistung, Wirtschaftlichkeit und Lebensdauer gerecht werden. In den letzten Jahrzehnten wurden insbesondere auf dem zivilen Sektor Flugtriebwerke entwickelt, die den obigen Anforderungen voll gerecht werden. Bei der Entwicklung von Flugtriebwerken spielt unter anderem die Werkstoffauswahl, die Suche nach neuen, geeigneten Werkstoffen sowie die Suche nach neuen Fertigungsverfahren eine entscheidende Rolle.

Die wichtigsten, heutzutage für Flugtriebwerke oder sonstige Gasturbinen verwendeten Werkstoffe sind Titanlegierungen, Nickellegierungen (auch Superlegierungen genannt) und hochfeste Stähle. Die hochfesten Stähle werden für Wellenteile, Getriebeteile, Verdichtergehäuse und Turbinengehäuse verwendet. Titanlegierungen sind typische Werkstoffe für Verdichterteile. Nickellegierungen sind für die heißen Teile des Flugtriebwerks geeignet.

Als Fertigungsverfahren für Gasturbinenbauteile aus Titanlegierungen, Nickellegierung oder sonstigen Legierungen sind aus dem Stand der Technik in erster Linie das Feingießen, Schmieden und Fräsen bekannt. Alle hochbeanspruchten Gasturbinenbauteile, wie zum Beispiel die Schaufeln für einen Verdichter, sind Schmiedeteile. Laufschaufeln und Leitschaufeln der Turbine werden hingegen in der Regel als Feingussteile ausgeführt. Integral beschaufelte Rotoren, wie Blisks (bladed disks) oder Blings (bladed rings), können nach dem Stand der Technik durch Fräsen aus dem Vollen hergestellt werden. Das Fräsen aus dem Vollen findet vor allem bei der Herstellung von Blisks oder Blings aus Titanwerkstoffen Verwendung. Das Fräsen von integral beschaufelten Rotoren aus Nickelwerkstoffen ist wegen der schlechten Zerspanbarkeit des Nickelwerkstoffs problematisch.

Zur Halterung bzw. Fixierung von durch Fräsen zu bearbeitenden Bauteilen bei der Fräsbearbeitung werden nach der Praxis die durch Fräsen zu bearbeitenden Bauteile in einer Fixiereinrichtung eingespannt. Dennoch besteht das Problem, dass die zu bearbeitenden Bauteile bei der Fräsbearbeitung zu Schwingungen angeregt werden.

Derartige Schwingungen bei der Fräsbearbeitung können insbesondere an schwingungsempfindlichen Bereichen des durch Fräsen zu bearbeitenden Bauteils Beschädigungen verursachen.

Das Dokument US 5 867 885 A schützt ein Verfahren zur Fräsbearbeitung von integral beschaufelten Rotoren für Gasturbinen, bei dem die Strömungskanäle zwischen den Schaufeln spanabhebend gefertigt werden. Die bis zu einem Teil ihrer endgültigen radialen Tiefe vorgefertigten Strömungskanäle werden mit einem aushärtbaren Kunststoff ausgegossen. Der Kunststoff verbessert die mechanischen Eigenschaften des Bauteils, wie z. B. das Schwingungsverhalten, und stellt über eingebettete, konische Stifte eine mechanisch belastbare Verbindung zu einer ringförmigen Fixiereinrichtung her. Ein Teil des Kunststoffs wird beim zerspanen entfernt, der verbleibende Teil durch Ausschmelzen. Dabei vermischen sich metallische Bauteilspäne mit Kunststoffspänen.

Hiervon ausgehend liegt der vorliegenden Erfindung das Problem zu Grunde, ein besonders wirtschaftliches und umweltschonendes Verfahren zur Fräsbearbeitung von Bauteilen zu schaffen.

Dieses Problem wird durch ein verfahren zur Fräsbearbeitung von Bauteilen im Sinne von Anspruch 1 gelöst. Erfindungsgemäß werden zur Anpassung des Schwingungsverhaltens des durch Fräsen zu bearbeitenden Bauteils Bereiche des Bauteils mit einem zerspanbaren und magnetischen Kunststoff eingegossen und/oder ausgegossen. Nach dem Fräsen werden Späne des Bauteilwerkstoffs von Spänen des Kunststoffs durch magnetisches Abscheiden getrennt.

Verringerte Schwingungen bei der Fräsbearbeitung gewährleisten des Weiteren eine verbesserte Qualität der durch Fräsen hergestellten Oberfläche. Weiterhin sind zum Fräsen verwendete Fräswerkzeuge einer geringeren Belastung ausgesetzt, wodurch höhere Standzeiten der Fräswerkzeuge und damit geringere Werkzeugkosten realisiert werden können.

Die hier vorliegende Erfindung betrifft ein Verfahren zur Fräsbearbeitung von Bauteilen, insbesondere von Bauteilen eines Gasturbinenflugtriebwerks, wie zum Beispiel eines integral beschaufelten Rotors.

Zum Fräsen werden Bauteile in einer Fixiereinrichtung eingespannt, um so die durch Fräsen zu bearbeitenden Bauteile bei der Fräsbearbeitung in Ihrer Position zu einem Fräswerkzeug auszurichten. Bei der Fräsbearbeitung wird ein zu bearbeitendes Bauteil sowie das zum Fräsen verwendete Fräswerkzeug zu Schwingungen angeregt. Schwingungen beeinträchtigen die beim Fräsen herstellbare Oberflächenqualität. Weiterhin können durch Schwingungen schwingungsempfindliche bzw. labile Bereiche des durch Fräsen zu bearbeitenden Bauteils beschädigt werden. Weiterhin kann das zum Fräsen verwendete Fräswerkzeug in Folge der Schwingungen beschädigt werden.

Daher wird vorgeschlagen, Bereiche des durch Fräsen zu bearbeitenden Bauteils mit einem bzw. in einem zerspanbaren Kunststoff einzugießen und/oder auszugießen, um so das Schwingungsverhalten des Bauteils bzw. des eingegossenen und/oder ausgegossenen Bereichs des Bauteils anzupassen. Dabei wird das Schwingungsverhalten im Sinne einer Reduzierung der Schwingungsneigung angepasst. Die Verringerung von Schwingungen des Bauteils beim Fräsen sorgt dafür, dass beim Fräsen Oberflächen mit einer höheren Qualität hergestellt werden können. Weiterhin wird die Gefahr von Bauteilbeschädigungen, insbesondere an sohwingungsempfindlichen Bereichen des Bauteils, reduziert. Des Weiteren unterliegen zum Fräsen verwendete Fräswerkzeuge einer geringeren Belastung.

Vorzugsweise werden schwingungsempfindliche bzw. labile Bereiche des Bauteils zur Anpassung des Schwingungsverhaltens mit dem Kunststoff eingegossen und/oder ausgegossen. So können zum Beispiel Hohlräume und/oder freiliegende Überstände des durch Fräsen zu bearbeitenden Bauteils eingegossen und/oder ausgegossen werden. Beim Kunststoff handelt es sich erfindungsgemäß um einen magnetischen Kunststoff, was den Vorteil hat, dass nach dem Fräsen Späne des Bauteilwerkstoffs von Spänen des Kunststoffs durch magnetisches Abscheiden getrennt werden können.

Vorzugsweise findet das erfindungsgemäße Verfahren bei der Fertigung von integral beschaufelten Gasturbinenrotoren Verwendung. Zu fräsende Vertiefungen bilden dabei Strömungskanäle, die sich ausbildenden Seitenwände bilden Schaufeloberflächen des integral beschaufelten Gasturbinenrotors-Bei der Fertigung eines integral beschaufelten Gasturbinenrotors wird dabei vorzugsweise derart vorgegangen, dass zuerst jede zweite Vertiefung zwischen benachbarten Laufschaufeln des Gasturbinenrotors gefräst wird. Hierbei wird an jeder herzustellenden Laufschaufel dann entweder eine Saugseite oder eine Druckseite gefräst.

Anschließend werden die gefrästen Vertiefungen mit dem Kunststoff eingegossen bzw. ausgegossen, wobei darauffolgend die verbleibenden vertiefungen zwischen benachbarten Laufschaufeln gefräst werden. In diesem Schritt werden dann an Laufschaufeln, an denen zuvor Saugseiten gefräst wurden,

Druckseiten gefräst. An Laufschaufeln, an denen hingegen zuvor Druckseiten gefräst wurden, werden dann Saugseiten gefräst. Bedingt dadurch, dass zuvor die zuerst gefrästen Vertiefungen mit Kunststoff ausgegossen wurden, werden die Laufschaufeln beim Fräsen stabilisiert, so dass dieselben eine geringere Schwingungsneigung aufweisen. Nach dem Fräsen wird der Kunststoff entfernt.

Besonders geeignet ist das Verfahren dann, wenn integral beschaufelte Gasturbinenrotoren mit relativ großen und dünnen Schaufelblättern im Bereich der durch Fräsen herzustellenden Laufschaufeln gefertigt werden müssen, wie dies zum Beispiel bei integral beschaufelten Rotoren für Niederdruckverdichter der Fall ist.

## Patentansprüche

1. Verfahren zur Fräsbearbeitung von Bauteilen unter Erzeugung von Vertiefungen mit einer oder mehreren Seitenwänden, insbesondere zur Fertigung von integral beschaufelten Rotoren für Gasturbinen, bei welchen die Vertiefungen Strömungskanäle und die Seitenwände Schaufeloberflächen eines integral beschaufelten Rotors bilden, wobei das durch Fräsen zu bearbeitende Bauteil zur Fräsbearbeitung an einer Fixiereinrichtung eingespannt wird, und wobei zur Anpassung des Schwingungsverhaltens des durch Fräsen zu bearbeitenden Bauteils Bereiche des Bauteils mit einem zerspanbaren Kunststoff eingegossen und/oder ausgegossen werden,
**dadurch gekennzeichnet,**
**dass** die ein- und/oder auszugießenden Bereiche des Bauteils mit einem zerspanbaren und magnetischen Kunststoff eingegossen und/oder ausgegossen werden, und nach dem Fräsen Späne des Bauteilwerkstoffs von Spänen des Kunststoffs durch magnetisches Abscheiden getrennt werden.

2. Verfahren nach Anspruch 1,
**dadurch gekennzeichnet,**
**dass** bei der Fertigung eines integral beschaufelten Rotors zuerst jede zweite Vertiefung gefräst wird, dass anschließend die gefrästen Vertiefungen mit dem magnetischen Kunststoff eingegossen und/oder ausgegossen werden, dass darauffolgend die verbleibenden Vertiefungen gefräst werden, und dass anschließend der Kunststoff entfernt wird.

## Claims

1. Method for the milling machining of components by generating depressions with one or more side walls, in particular for the production of integrally bladed rotors for gas turbines, wherein the depressions form flow channels and the side walls form blade surfaces of an integrally bladed rotor, wherein the component that is to be machined by milling is clamped on a fixing device for the milling machining, and wherein regions of the component are infused and/or effused with a machinable plastic for the adaptation of the vibrational properties of the component that is to be machined by milling,
**characterised in that**
the regions of the component that are to be infused and/or effused are infused and/or effused with a machinable and magnetic plastic, and, after the milling, shavings of the component material are separated from shavings of the plastic by magnetic separation.

2. Method according to claim 1,
**characterised in that**
during the production of an integrally bladed rotor, firstly every second repression is milled, then the milled depressions are infused and/or effused with the magnetic plastic, then the remaining depressions are milled, and finally the plastic is removed.

## Revendications

1. Procédé d'usinage par fraisage de pièces par production de gorges avec une ou plusieurs parois latérales, en particulier pour la fabrication de rotors à aubage intégré pour des turbines à gaz, où les gorges forment des canaux d'écoulement et les parois latérales des surfaces d'aubes d'un rotor à aubage intégré, où la pièce à usiner par fraisage est serrée sur un dispositif de fixation en vue du fraisage, et où, pour ajuster le comportement vibratoire de la pièce à usiner par fraisage, un plastique usinable est coulé dans et/ou sur des zones de la pièce,
**caractérisé en ce que**
la coulée est effectuée dans et/ou sur des zones de la pièce devant être soumises à celle-ci avec une matière plastique usinable et magnétique, et **en ce qu'**après le fraisage, les copeaux du matériau de la pièce sont séparés des copeaux de la matière plastique par séparation magnétique.

2. Procédé selon la revendication 1,
**caractérisé en ce que**
pour la fabrication d'un rotor à aubage intégré, chaque deuxième gorge est d'abord fraisée, **en ce que** la matière plastique magnétique est ensuite coulée dans et/ou sur les gorges fraisées, **en ce que** les gorges restantes sont consécutivement fraisées, et **en ce que** la matière plastique est finalement retirée.
